# EUROPEAN PATENT APPLICATION

(11) **EP 0 566 027 A1**
(43) Date of publication of application: **20.10.1993**
(21) Application number: 93105806.9
(22) Date of filing: 08.04.1993
(51) Int. Cl.: G01S 17/88, G01S 7/48, B60Q 1/52

(54) **A system for monitoring the zone around a vehicle**

(30) Priority: 14.04.1992 IT TO920334
(71) Applicant: CARELLO S.p.A., I-10135 Torino (IT)
(72) Inventor: Innocenti, Gianfranco, I-10040 Rivalta (Torino) (IT); Alessandretti, Giancarlo, I-10146 Torino (IT); Pera, Luciano, I-10048 Vinovo (Torino) (IT); Marengo, Franco, I-10154 Torino (IT)
(74) Representative: Bosotti, Luciano

(57) **Abstract**

A system for observing or monitoring the zone around the vehicle is formed with the use of a plurality of optical, preferably passive, infra-red heads (1 to 6) connected to a central unit (7) including a source (12) of the radiation to be used for the monitoring as well as a detector (13) sensitive to the radiation. A multiplexer (8) selectively connects each head (1 to 6) to the central unit, usually according to a prearranged cyclic sequence, so that obstacles and bodies which come close to the vehicle in the various regions kept under surveillance by the various optical heads (1 to 6) can be monitored and observed in sequence.

## Description

The present invention relates to systems for monitoring the zones around vehicles and has been developed with particular attention to its possible use in motor cars.

The expression "systems for monitoring the zones around vehicles" is intended to indicate systems, usually including optical sensors (typically operating in the infra-red range), which enable the zone around a vehicle to be searched (monitored) so that obstacles and/or objects approaching or moving away from the vehicle can be identified and indicated. The functions of these systems are primarily those of anti-collision systems and/or aids to the driving of the vehicle in conditions of poor visibility.

In particular, solutions which provide for an optical radar (so-called "opdar") unit, constituted in practice by an emitter-receiver pair operating in the infra-red range, to be mounted in a vehicle such as a motor car, usually in the front portion thereof, have been developed for some time (see, for example, the patent documents GB-A-2 101 832, GB-A-2 139 036, or US-A-4 552 456). Some of the radiation projected by the emitter is returned backwards by the obstacles encountered in its path, and the detection of the fraction of the radiation which returns towards the vehicle thus enables indications to be provided of the position and possibly the speeds of obstacles and/or objects situated around the vehicle, so that monitoring is carried out in at least part of the zone in front of the vehicle.

Naturally, the observation and monitoring could be extended to cover a good portion, if not the whole of the zone surrounding the vehicle (at least in plan) so as to provide the driver with information and warning signals relating, not only to the obstacles which may be in front of the vehicle, but also, for example, to vehicles which are coming too close from behind or from the side, for example, in the so-called "blind spot" of the rear-view mirror, or even indications on the height of the vehicle from the ground or its speed relative to the ground.

In principle, such a solution could be put into practice with the use of a plurality of separate detection systems each for monitoring a portion of the zone surrounding the vehicle, according to a solution similar to that used, for example, in aircraft which usually have navigational radar at the front, altimetric radar for observing the ground, etc.

It goes without saying that, for obvious reasons of cost, a solution of this type could not be proposed for vehicles which are to be mass-produced.

The object of the present invention is to provide a system for monitoring the zone around a vehicle, preferably an infra-red optical system, which effectively fulfils the need expressed above without giving rise to a system which is complex and correspondingly expensive not only to produce but also because of resulting problems in fitting and installing it in a vehicle such as a motor car.

According to the present invention, this object is achieved by virtue of a system having the specific characteristics claimed in the claims which follow.

The invention will now be described, purely by way of non-limiting example, with reference to the appended drawings, in which:
Figure 1 shows the general structure of a system according to the invention fitted in a motor vehicle such as a motor car,
Figure 2 shows, in the form of a block diagram, the structure of some optical components comprised in the system of Figure 1, and
Figure 3 is a time graph showing schematically some possible ways in which a system according to the invention can operate.

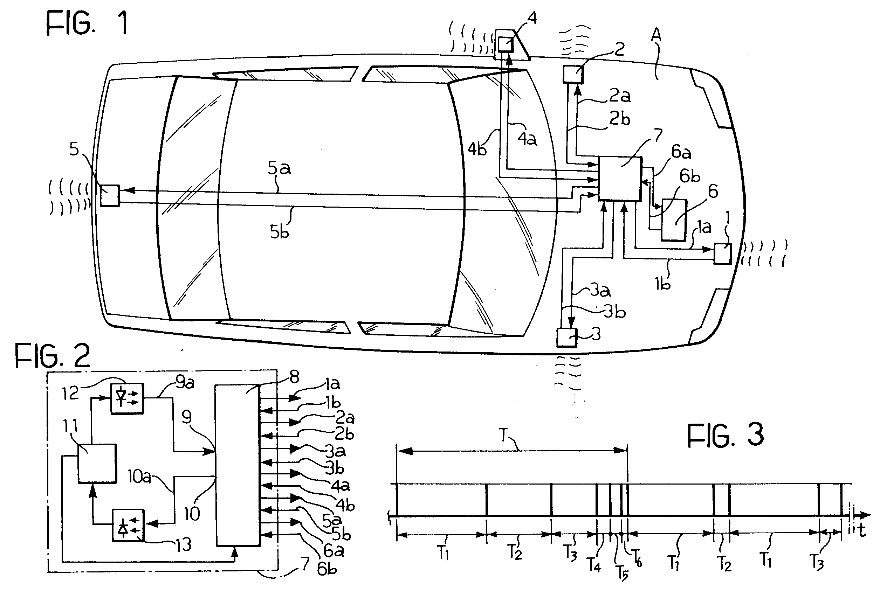

In Figure 1, a motor vehicle, such as a motor car, is generally indicated A.

A system fitted in the motor car for monitoring the surrounding zone is constituted, in general, by a set of monitoring units 1 to 6 (monitoring heads) which are intended to observe (monitor) the zone surrounding the vehicle with the primary purpose of indicating obstacles, or objects in general, near to and/or approaching the car A.

Preferably, each of the units 1 to 6 is constituted by a unit for emitting and receiving optical signals (naturally this expression includes infra-red signals which are the signals used most frequently for this purpose).

In practice, each unit 1 to 6 comprises a projector element which emits a beam of infra-red radiation into the space in front of and outside the motor car A and a pick-up element which is sensitive to the fraction of the infra-red radiation which returns towards the car as a result of reflection/backscattering by objects surrounding the vehicle.

In practice, each unit 1 to 6 is constituted by a so-called "optical head" forming a kind of optical radar (opdar) unit which can keep a respective region of the zone surrounding the vehicle under surveillance.

In particular, the optical head 1 (which may be incorporated in one of the headlamps of the car A) is intended to search the space in front of the vehicle and the optical heads 2 and 3 perform their monitoring action at the sides of the vehicle. The optical head 4 is preferably associated with the rear-view mirror with the specific purpose of keeping the region of the so-called "blind spot" of the rear-view mirror under surveillance. The optical head 5 is mounted on the rear end of the motor car A with the purpose of keeping the space behind the vehicle under surveillance (for example, in order to indicate vehicles which are following too closely for the speed at which they are travelling). Furthermore, the optical head 6, which is mounted on the lower portion of the car, performs a search towards the ground so that the height of the vehicle from the ground and, in particular, the speed of movement of the vehicle can be monitored.

In particular, one or more of the optical heads 1 to 6 (in particular that which monitors the space in front of the vehicle, that is, the optical head 1) may have mechanical, optical, and/or electrical means for performing a movement in order to scan the area under surveillance.

This is in accordance with principles widely known in the art (see, for example, the patent documents cited in the introductory portion of the present description) which do not need to be repeated herein and, moreover, are not relevant per se for the purposes of an understanding of the invention.

A first important characteristic of the system according to the invention is that the optical units or heads 1 to 6 are generally passive, in the sense that they contain neither sources for generating the radiation used for the surveillance (typically a diode emitting infra-red light) nor photodetectors (typically photodiodes or phototransistors). On the contrary, the heads 1 to 6 comprise exclusively the optical units for projecting/emitting and picking up the infra-red radiation. The radiation is sent to the units in question by means of respective transmission lines 1a, 2a, 3a, 4a, 5a, and 6a, which are preferably constituted by optical fibres. Similarly, the radiation picked up by the optical heads 1 to 6 is sent to respective transmission lines 1b, 2b, 3b, 4b, 5b and 6b which are also preferably constituted by optical fibres.

The set of optical fibres 1a, 1b ... 6a, 6b is connected to a central processing unit 7, the structure of which is shown in greater detail in Figure 2.

The unit comprises an optical multiplexer-demultiplexer 8 with an input terminal 9 for the radiation to be emitted around the car A and an output terminal 10 for the radiation reflected and/or backscattered by the surrounding obstacles.

In practice, the demultiplexer 8 (which is constituted by a known optical component, typically formed with integrated optics) can selectively transfer the optical radiation applied to the input terminal 9 to one of the outputs to which the transmission optical fibres 1a....6a are connected, in dependence on a control signal from a central processing unit 11 (for example a microprocessor). Conversely, the same component can transfer to the terminal 10 the radiation taken selectively from one of the terminals to which the receiving fibres 1b...6b are connected.

An emitter of infra-red radiation such as an LED or a laser diode 12 is connected to the input terminal 9, also usually by means of an optical fibre 9a. A photodetector 13 (for example, a photodiode or a phototransistor), the sensitivity curve of which corresponds to the emission curve of the source 12, is correspondingly connected to the output terminal 10, preferably by means of a further optical fibre 10a.

The photoemitter 12 and the photodetector 13 are piloted by the processing unit 11 according to operating methods typical of the optical radar (opdar) systems to which reference has been made several times above; the photoemitter 12 is usually excited in a pulsed manner correlated with any scanning movement of the optical head or heads (1 to 6) so as to search the region under surveillance. This is all according to known criteria.

In the solution according to the invention, the pair of active elements (the photoemitter 12 and the photodetector 13) used for searching or monitoring the surrounding area is provided solely in the unit 7. In other words, this means that a single set of active elements 12, 13 is used to operate all the optical heads (or at least several optical heads ) 1 to 6 mounted on the vehicle. This is done according to a subdivision mechanism carried out in the time domain by the multiplexer device (the multiplexer-demultiplexer) 8 which initially connects the fibres 1a, 1b (and hence the optical head 1) to the emitter 12 and to the detector 13 for a period T1 and then goes on to the optical fibres 2a, 2b (that is, to the optical head 2) for a period T2 and so on for the optical head 3 (period T3), the optical head 4 (period T4), the optical head 5 (period T5) and, finally, for the optical head 6 (period T6) and then returns to the connection of the optical head 1 once more.

Each optical head 1 to 6 performs the monitoring function for which it is responsible within the respective period (T1 ... T6) during which it is connected to the emitter 12 and to the detector 13. This is usually achieved by means of a sequence of successive "readings" with the emission and detection of a number of optical signal pulses sufficient to achieve reliable monitoring.

In this connection, it is not generally necessary for the activation periods T1 ... T6 of the various optical heads (that is, the durations of the periods for which each optical head is connected to the unit 7) to be identical to one another. In general, the optical heads which are intended to perform the most critical monitoring functions (typically the optical head 1 which is intended to search the zone in front of the vehicle A) will preferably benefit from longer activation periods T1. This is also in consideration of the fact that an optical head such as the optical head 1 is generally intended to keep under surveillance and detect events which may develop rapidly in time (typically the fact that stationary obstacles are becoming closer to the car A at a relative velocity equal to the speed at which the vehicle is travelling). The other optical heads, on the other hand, may be interrogated for periods of shorter duration, particularly when the optical heads are intended to keep under surveillance events which may develop more slowly in time.

This latter result can be achieved in various ways, as shown schematically in Figure 3.

The left-hand portion of this drawing shows a possible activation sequence for the various optical heads, in which each optical head 1 to 6 is activated at a frequency defined by a period T which is equal to the sum of the activation periods T1 ... T6 of all the optical heads. If this solution is adopted, the multiplexer device 8 is controlled so as to activate the various optical heads 1 to 6 according to a fixed time sequence, reserving a longer activation period for some heads - as is the case, in the example shown, for the head 1 which is activated for the period T1 - than for the other heads. Alternatively, the multiplexer device 8 may be controlled in a manner such that the most critical optical heads (still with reference, by way of example, to the front monitoring head 1) are activated more frequently than the others; for example, by adopting a cyclic activation sequence for the heads 2 to 6, in which each step alternates with a phase in which the head 1 is activated.

Naturally, the activation sequence of the various optical heads 1 to 6 could be modified in time so as to adapt to changes in the situation in the surrounding area, by adjusting the control unit 11, particularly its control software (according to known methods). For example, when one of the heads is indicating and following a rapidly changing phenomenon, for example, the rapid approach of another vehicle on one side of or behind the car A, the unit 11 may modify the activation sequence so as to give the head in question a greater degree of priority (generally corresponding in practice to more frequent and/or longer activation periods) than is adopted under normal conditions, that is, when the head in question is not detecting any particular phenomenon.

## Claims

1. A system for monitoring the zone around a vehicle, for example, a motor car (A), in which radiation is emitted from the vehicle (A) and the fraction of the radiation which returns towards the vehicle (A) is then detected, characterized in that it comprises:
- a plurality of heads (1 to 6) for emitting the radiation and for picking up the fraction of the radiation which returns towards the vehicle,
- a source (12) for generating the radiation and a detector (13) for detecting the radiation, the source (12) and the detector (13) being common to the heads (1 to 6), and
- multiplexer means (8) for selectively transmitting the radiation generated by the source (12) to the heads (1 to 6), and for selectively transmitting the fraction of the radiation picked up from the heads (1 to 6) to the detector (13).

2. A system according to Claim 1, characterized in that the source (12) is a source of infra-red radiation.

3. A system according to Claim 1 or Claim 2, characterized in that the detector (13) is sensitive to light, for example, infra-red, radiation.

4. A system according to any one of the preceding claims, characterized in that the source (12) and the detector (13) are connected to the heads (1 to 6) by means of optical fibres (1a, 1b ... 6a, 6b; 9a, 10a).

5. A system according to any one of the preceding claims, characterised in that the multiplexer means (8) comprise an optical multiplexer and/or demultiplexer circuit.

6. A system according to any one of the preceding claims, characterized in that it comprises control means (11) for selectively controlling the connection of the heads (1 to 6) to the source (12) and to the detector (13) according to a predetermined sequence.

7. A system according to Claim 6, characterized in that the control means (11) connect the heads (1 to 6) to the source (12) and to the detector (13) for respective periods of time (T1 ... T6) of different durations.

8. A system according to Claim 6, characterized in that the control means (11) connect the heads (1 to 6) to the source (12) and to the detector (13) according to a sequence in which at least one (1) of the heads is connected to the source (12) and to the detector (13) more often than the other heads (2 to 6).
